# EUROPEAN PATENT SPECIFICATION

(11) **EP 4 464 186 B1**
(45) Date of publication and mention of the grant of the patent: **23.09.2026**
(21) Application number: 23213799.2
(22) Date of filing: 01.12.2023
(51) Int. Cl.: A42B 3/04, G02B 27/01

(54) **HELMET WITH COMBINER**
HELM MIT KOMBINATOR
CASQUE AVEC COMBINATEUR

(30) Priority: 18.05.2023 US 202318199032
(43) Date of publication of application: 20.11.2024
(73) Proprietor: Rockwell Collins, Inc., Cedar Rapids, IA 52498 (US)
(72) Inventor: GEYER, James Anthony, Newberg (US)
(74) Representative: Dehns

(56) References cited:
- US-A1- 2020 292 831
- US-A1- 2021 199 976
- US-A1- 2021 341 745

## Description

### TECHNICAL FIELD

The present invention relates to a helmet with a combiner.

### BACKGROUND

Current combiner breakaway mechanisms are passive: they rely on inertia or the kinetic energy of the combiner to move the combiner into a safe position, or more dangerously intentionally take a head strike by the pilot, in the event of a crash. Such designs have difficulty satisfying crash safety criteria, while still meeting mechanical and optical performance goals. Furthermore, passive breakaway mechanisms present certification risks: every unique design has to be individually tested and certified. Even very minor changes to the system can result in drastic impacts to the operation of the breakaway mechanism.

Future, lightweight combiner designs will only exacerbate the problem. It would be advantageous to have a combiner that satisfied performance criteria with superior safety features.

US 2020/292831 A1 discloses a helmet mounting for optical combiner having a pivoted mounting arm for the optical combiner which is movable between an operational position in a line of sight, and a retracted position displaced out of the line of sight. A translation mechanism provides translation of the optical combiner along the line of sight.

US 2021/199976 A1 discloses a combiner assembly for a ceiling mounted projection head up display system for an aircraft cabin having an optical combiner, and a support mechanism for supporting the optical combiner to be movable between an operational position and a stowage position, above the user.

### SUMMARY

An aircraft helmet is provided as recited in claim 1.

Further, optional features are provided as recited in claims 2 to 5.

It is to be understood that both the foregoing general description and the following detailed description are exemplary and explanatory only and should not restrict the scope of the claims. The accompanying drawings, which are incorporated in and constitute a part of the specification, illustrate exemplary embodiments and together with the general description, serve to explain the principles.

### BRIEF DESCRIPTION OF THE DRAWINGS

The numerous advantages of the embodiments disclosed herein may be better understood by those skilled in the art by reference to the accompanying figures in which:
FIG. 1 shows a perspective view of a combiner element according to an exemplary embodiment; and
FIG. 2 shows a system suitable for implementing an exemplary embodiment.

### DETAILED DESCRIPTION

It is to be understood that the phraseology and terminology employed herein is for the purpose of description and should not be regarded as limiting.

As used herein a letter following a reference numeral is intended to reference an embodiment of a feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Also, while various components may be depicted as being connected directly, direct connection is not a requirement. Components may be in data communication with intervening components that are not illustrated or described.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in at least one embodiment" in the specification does not necessarily refer to the same embodiment. Embodiments of the inventive concepts disclosed may include one or more of the features expressly described or inherently present herein, or any combination or sub-combination of two or more such features.

Broadly, embodiments disclosed herein are directed to an aircraft helmet with a combiner with an active breakaway mechanism. The breakaway mechanism includes a biasing element to positively direct the breakaway mechanism to a safe state, and a release element. In the event of a crash, the release element disengages, and the biasing element pushes the combiner into a safe orientation. The biasing element may be hydraulic, solenoid, compressed gas, pyrotechnic, a spring, a linear actuator, or the like. The release element may include a hydraulic, solenoid, electromagnet, spring, compressed gas, expanding gas, pyrotechnic, or the like.

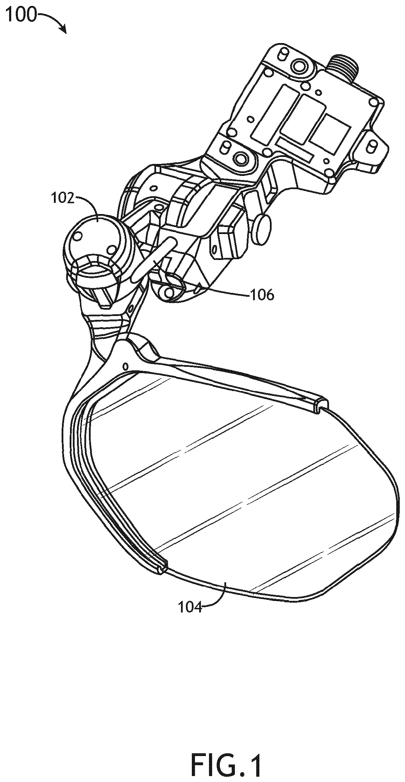

Referring to FIG. 1, a perspective view of a combiner element 100 according to an exemplary embodiment is shown. The combiner element 100 includes an active breakaway mechanism 102. Traditionally, combiners elements 100 are placed in front of the pilot during normal operation and include passive breakaway mechanisms that move the optical combiner 104 away from the user in the event of a crash. The active breakaway mechanism 102 includes a biasing element 106 that actively moves the optical combiner 104 from an operational state (as shown in FIG. 1) to a safe state with the optical combiner 104 away from the user's eye.

The biasing element 106 may comprise an element activated when a crash event is detected. For example, the biasing element 106 may comprise an electric solenoid, an expanding gas mixture (e.g. sodium azide (NaN₃), KNO₃, and SiO₂), an electromagnet, or a motor / servo. The combiner element 100 includes at least one processor and sensor for detecting a crash event (such as an accelerometer). Alternatively, but not in accordance with the claimed invention, or in addition, the combiner element 100 may be in data communication with a separate processor and sensor; the separate processor and sensor communicate a crash event to the combiner element 100 to actuate the biasing element 106.

In at least one embodiment, the biasing element 106 may comprise an energy storage element such as a spring or compressed gas cylinder. When a user puts the optical combiner 104 into an operational state, energy is stored in the biasing element 106 to provide sufficient energy to actively transition the optical combiner 104 back to a safe state in the event of a crash. The active breakaway mechanism 102 includes a release element. When the optical combiner 104 is placed in the operational state, and energy stored in the biasing element 106, the release element is engaged to keep the optical combiner in the operational state and retain the energy stored in the biasing element 106.

The release element may include an electrical component (such as an electromagnet, motor / servo, or electric solenoid), a chemical component (such as a pyrotechnic bolt or expanding gas mixture), or a physical component (such as a weighted pendulum, spring, or compressed gas cylinder). The release element is controlled by the at least one processor and sensor for detecting a crash event (such as an accelerometer). Alternatively, but not in accordance with the claimed invention, or in addition, the combiner element 100 may be in data communication with a separate processor and sensor; the separate processor and sensor communicate a crash event to the combiner element 100 to actuate the release element.

A biasing element 106 with an active actuation method pushes or adds a force to the optical combiner to push it out of the way. Alternatively, a biasing element 106 may store energy for release by an active release element that removes a force holding the optical combiner in place so the biasing element 106 may push it. In at least one embodiment, the biasing element 106 or release element may be initially actuated via inertia of the optical combiner 104.

Embodiments of the present invention allow an optical combiner to be safely actuated into breakaway in any and all crash scenarios via an active system when a crash event is detected (such as exceeding a permissible G limit for the airframe). By assisting the optical combiner into a safe position, the optical combiner is able to move farther, faster, and more reliably into its breakaway position than possible with existing system.

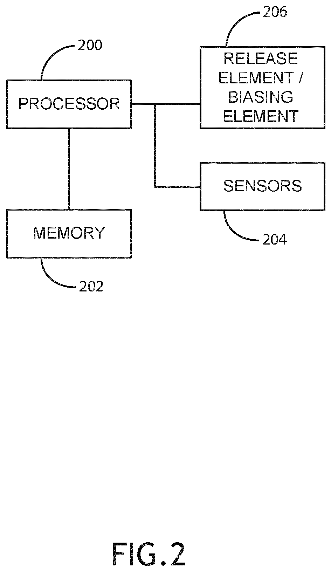

Referring to FIG. 2, a system suitable for implementing an exemplary embodiment is shown. The system includes a processor 200 configured to receive signals from a sensor 204. Based on the signals, the processor 200 directly actuates a biasing element / actuates a release element 206 to force the optical combiner into a safe orientation.

In at least one embodiment, the biasing element 206 may comprise an electric solenoid, an expanding gas mixture (e.g. sodium azide (NaN₃), KNO₃, and SiO₂), an electromagnet, or a motor / servo. In such embodiments, the processor 200 may directly actuate the biasing element 206. Alternatively, biasing element may comprise a mechanical energy storage device with a release element 206 including an electrical component (such as an electromagnet, motor / servo, or electric solenoid), a chemical component (such as a pyrotechnic bolt or expanding gas mixture), or a physical component (such as a weighted pendulum, spring, or compressed gas cylinder). In such embodiments, the processor 200 may actuate the release element.

In at least one embodiment, the sensor 204 may comprise an accelerometer, ultrasonic or optical distance sensor, or the like. Furthermore, the processor 200 may comprise a field programmable gate array or other solid-state system. Alternatively, the processor 200 may comprise a general purpose processor configured via non-transitory code stored in a memory 202.

An active breakaway mechanism with a reliable release system would improve overall design flexibility, pilot safety in a crash event, and reduce the risk of HIC test failure when introducing new designs or updates, enabling easier certification of future HUD systems.

The forms herein before described being merely explanatory embodiments thereof, it is the following claims that define the scope of the invention.

## Claims

1. An aircraft helmet, **characterised by** the aircraft helmet comprising:
a combiner (104) with a breakaway mechanism (102) comprising:
a biasing element (106);
a release element; and
at least one processor (200) configured via non-transitory processor executable code,
wherein:
the biasing element (106) is configured to actively transition the combiner (104) from an operational state to a safe state; and
the at least one processor (200) is configured to:
detect a crash event:
actuate the biasing element (106) when a crash event is detected.

2. The aircraft helmet of Claim 1, further comprising an accelerometer configured to detect a crash event, wherein the at least one processor (200) is configured to detect the crash event via the accelerometer.

3. The aircraft helmet of Claim 1 or 2, wherein the biasing element (106) is a compressed gas cylinder; or
wherein the biasing element is an electric solenoid.

4. The aircraft helmet of Claim 1, 2 or 3, wherein:
the release element is configured to retain the combiner (104) in the operational state until a crash event is detected; and
the at least one processor is configured to actuate the release element when a crash event is detected.

5. The aircraft helmet of any of Claims 1 to 4, wherein the release element is an electromagnet.

## Patentansprüche

1. Luftfahrzeughelm, **dadurch gekennzeichnet, dass** der Luftfahrzeughelm Folgendes umfasst:
einen Kombinator (104) mit einem Abreißmechanismus (102), umfassend:
ein Vorspannelement (106);
ein Freigabeelement; und
mindestens einen Prozessor (200), der über nichtflüchtigen prozessorausführbaren Code konfiguriert ist,
wobei:
das Vorspannelement (106) konfiguriert ist, um den Kombinator (104) aktiv von einem Betriebszustand in einen sicheren Zustand zu überführen; und
der mindestens eine Prozessor (200) konfiguriert ist, um:
ein Aufprallereignis zu erkennen:
das Vorspannelement (106) zu betätigen, wenn ein Aufprallereignis erkannt wird.

2. Luftfahrzeughelm nach Anspruch 1, ferner umfassend einen Beschleunigungsmesser, der konfiguriert ist, um ein Aufprallereignis zu erkennen, wobei der mindestens eine Prozessor (200) konfiguriert ist, um das Aufprallereignis über den Beschleunigungsmesser zu erkennen.

3. Luftfahrzeughelm nach Anspruch 1 oder 2, wobei das Vorspannelement (106) ein Druckgaszylinder ist; oder
wobei das Vorspannelement ein elektrischer Hubmagnet ist.

4. Luftfahrzeughelm nach Anspruch 1, 2 oder 3, wobei:
das Freigabeelement konfiguriert ist, um den Kombinator (104) in dem Betriebszustand zu halten, bis ein Aufprallereignis erkannt wird; und
der mindestens eine Prozessor konfiguriert ist, um das Freigabeelement zu betätigen, wenn ein Aufprallereignis erkannt wird.

5. Luftfahrzeughelm nach einem der Ansprüche 1 bis 4, wobei das Freigabeelement ein Elektromagnet ist.

## Revendications

1. Casque d'aéronef, **caractérisé en ce que** le casque d'aéronef comprend :
un combinateur (104) avec un mécanisme de rupture (102) comprenant :
un élément de sollicitation (106) ;
un élément de libération ; et
au moins un processeur (200) configuré via un code exécutable de processeur non transitoire,
dans lequel :
l'élément de sollicitation (106) est configuré pour faire passer activement le combinateur (104) d'un état opérationnel à un état sûr ; et
l'au moins un processeur (200) est configuré pour :
détecter un événement de crash :
actionner l'élément de sollicitation (106) lorsqu'un événement de crash est détecté.

2. Casque d'aéronef de la revendication 1, comprenant en outre un accéléromètre configuré pour détecter un événement de crash, dans lequel l'au moins un processeur (200) est configuré pour détecter l'événement de crash via l'accéléromètre.

3. Casque d'aéronef selon la revendication 1 ou 2, dans lequel l'élément de sollicitation (106) est une bouteille de gaz comprimé ; ou
dans lequel l'élément de sollicitation est un solénoïde électrique.

4. Casque d'aéronef selon la revendication 1, 2 ou 3, dans lequel :
l'élément de libération est configuré pour maintenir le combinateur (104) en état opérationnel jusqu'à la détection d'un événement de crash ; et
l'au moins un processeur est configuré pour actionner l'élément de libération lorsqu'un événement de crash est détecté.

5. Casque d'aéronef selon l'une quelconque des revendications 1 à 4, dans lequel l'élément de libération est un électroaimant.
